# EUROPÄISCHE PATENTSCHRIFT

(11) **EP 4 032 107 B1**
(45) Veröffentlichungstag und Bekanntmachung des Hinweises auf die Patenterteilung: **30.09.2026**
(21) Anmeldenummer: 20757313.0
(22) Anmeldetag: 14.08.2020
(51) Int. Cl.: H01C 1/148

(54) **SENSORVORRICHTUNG UND VERFAHREN ZUR HERSTELLUNG EINER SENSORVORRICHTUNG**
SENSOR DEVICE AND METHOD FOR PRODUCING A SENSOR DEVICE
DISPOSITIF DE DÉTECTION ET PROCÉDÉ DE PRODUCTION D'UN DISPOSITIF DE DÉTECTION

(30) Priorität: 20.09.2019 DE 102019125340
(43) Veröffentlichungstag der Anmeldung: 27.07.2022
(73) Patentinhaber: TDK Electronics AG, 81671 München (DE)
(72) Erfinder: HOFRICHTER, Alfred, 8230 Hartberg (AT); FEICHTINGER, Thomas, 8010 Graz (AT)
(74) Vertreter: Epping - Hermann - Fischer
(86) Internationale Anmeldenummer: PCT/EP2020/072850
(87) Internationale Veröffentlichungsnummer: WO 2021/052690

(56) Entgegenhaltungen:
- WO-A1-2014/059263
- DE-A1- 102012 110 556
- DE-A1- 102017 106 055
- DE-A1- 19 806 296
- JP-A- H10 116 708
- US-A1- 2004 119 579
- US-A1- 2014 106 141
- MATTANA GIORGIO ET AL: "Recent advances in printed sensors on foil", MATERIALS TODAY, vol. 19, no. 2, 31 March 2016 (2016-03-31), pages 88 - 99, XP029450251, ISSN: 1369-7021, DOI: 10.1016/J.MATTOD.2015.08.001

## Beschreibung

Die vorliegende Erfindung betrifft eine Sensorvorrichtung, insbesondere eine Sensorvorrichtung zur Messung einer Temperatur. Die vorliegende Erfindung betrifft weiterhin ein Verfahren zur Herstellung einer Sensorvorrichtung.

In verschiedenen Anwendungen insbesondere für Hochleistungsmodule wie PIMs (Power Integrated Modules) werden Chips, insbesondere Keramikchips verwendet. Diese Chips werden unter anderem zur Temperaturmessung eingesetzt.

Typischerweise besteht ein entsprechendes System aus einem Keramikchip, der mit Terminierungsschichten mittels eines Sinterprozesses auf ein Substrat aufgebracht wird. Dieser Keramikchip wird daraufhin mittels eines Bonddrahtes auf der Oberfläche kontaktiert, wobei die Terminierungsschicht an das Bondmaterial und die Bondtechnologie angepasst sein muss.

Die Keramikchips werden üblicherweise aus einem gesinterten und polierten Substrat herausgeschnitten, wobei der Widerstand des Bauteils durch die Geometrie ausgesteuert wird. Besonders für enge Widerstandstoleranzen ist dieser Prozess relativ aufwändig, da die Geometrie einen sehr großen Einfluss hat. Dadurch ist dieser Prozess ausschussbehaftet, relativ kompliziert und teuer. Des Weiteren ist die Geometrie der Bauteile nicht einheitlich, da die Chips aus jedem Keramiksubstrat leicht unterschiedliche Geometrien haben können. Auch kann es durch den Sägeprozess zu Beschädigungen des Bauteils kommen.

Abhängig von der Bonding Technologie und den für das gesamte Modul ausgewählten Prozessparametern (Bonddrahtmaterial, Bonddrahtdicke) können ferner sehr hohe Kräfte auf den Keramikchip wirken. Dadurch kann es zu Beschädigungen wie zum Beispiel Ausbrüchen kommen, die bis zum kompletten Bruch des Chips führen können.

Um die mechanischen Beschädigungen zu verringern war es bislang lediglich möglich entweder die Bondparameter anzupassen (z.B. dünner Bonddraht), den Keramikchip dicker auszuführen oder ein robusteres Keramikmaterial zu verwenden.

Das Dokument JP H10 116708 A beschreibt einen Chip-Thermistor mit einem Thermistorelement und Außenelektroden. Zwischen den Außenelektroden und der Oberfläche des Thermistorelements befindet sich eine leitfähige Harzschicht, die die Innenelektroden des Thermistorelements kontaktiert.

Das Dokument WO 2014/059263 A1 bezieht sich auf einen Gegenstand, der eine auf einem Glassubstrat angeordnete Folie enthält, die verstärkt werden kann, wobei die Grenzfläche zwischen der Folie und dem Glassubstrat so modifiziert wird, dass der Gegenstand seine durchschnittliche Biegefestigkeit beibehält.

Das Dokument DE 10 2017 106055 A1 beschreibt ein Trägersubstrat umfassend einen Substratkörper, der elektrische Anschlussinseln auf einer oberen Oberfläche davon aufweist. Eine organische Dämpfungsschicht bedeckt mindestens einen Teil der oberen Oberfläche des Substratkörpers.

Aufgabe ist es eine verbesserte Sensorvorrichtung und ein Verfahren zur Herstellung einer verbesserten Sensorvorrichtung anzugeben.

Diese Aufgabe wird durch eine Sensorvorrichtung und ein Verfahren gemäß der unabhängigen Ansprüche gelöst.

Gemäß einem Aspekt wird eine Sensorvorrichtung angegeben. Vorzugsweise ist die Sensorvorrichtung zur Messung einer Temperatur ausgebildet. Die Sensorvorrichtung findet beispielsweise Anwendung in Hochleistungsmodulen wie PIMs.

Die Sensorvorrichtung weist wenigstens einen Sensorchip auf. Der Sensorchip weist eine Vielzahl von keramischen Schichten auf. Die keramischen Schichten weisen bevorzugt ein Material mit NTC (Negative Temperature Coefficient) Charakteristik auf. Vorzugsweise ist der Sensorchip ein NTC Multilayer Chip.

Der Sensorchip weist eine Vielzahl von unbedruckten keramischen Schichten auf. Mit anderen Worten, auf die jeweilige keramische Schicht ist kein weiteres Material aufgebracht.

Weiterhin weist der Sensorchip eine Vielzahl von bedruckten keramischen Schichten auf. Bedruckte und unbedruckte keramische Schichten sind übereinander zu einem Stapel zusammengesetzt. Dabei kann auf jede unbedruckte Schicht eine bedruckte Schicht folgen. Vorzugsweise ist zwischen zwei bedruckten Schichten eine Mehrzahl von unbedruckten keramischen Schichten angeordnet.

Die bedruckten keramischen Schichten sind wenigstens teilweise mit einem elektrisch leitfähigen Material, beispielsweise Palladium, Platin, Kupfer, Silber oder Gold, bedruckt. Das Bedrucken kann dabei in einem oder in mehreren Schritten erfolgen. Das elektrisch leitfähige Material ist vorzugsweise mittels Siebdruck auf wenigstens einen Teilbereich der keramischen Schicht aufgedruckt. Durch dieses Verfahren kann ein genau vorbestimmter Bereich der jeweiligen Schicht präzise bedruckt werden.

Die Sensorvorrichtung weist wenigstens eine Terminierungsschicht zur elektrischen Kontaktierung des elektrisch leitfähigen Materials bzw. der Innenelektroden auf. Die wenigstens eine Terminierungsschicht weist ein Edelmetall auf, beispielsweise Au oder Ag.

Das elektrisch leitfähige Material auf den bedruckten keramischen Schichten fungiert als Innenelektroden des Sensorchips. Ein elektrischer Widerstand des Sensorchips wird entweder durch einen Überlappbereich des elektrisch leitfähigen Materials und somit durch einen Überlapp der Innenelektroden oder durch einen Abstand des elektrisch leitfähigen Materials zu der Terminierungsschicht bestimmt. Mit Überlappbereich ist dabei derjenige Bereich gemeint, in welchem elektrisch leitfähiges Material verschiedener bedruckter keramischer Schichten in Stapelrichtung übereinander angeordnet ist. Je größer der Überlappbereich (Ausdehnung des Bereichs senkrecht zur Stapelrichtung), desto kleiner ist der Widerstand. Je kleiner der Überlappbereich, desto größer ist der Widerstand. Je größer der Abstand zwischen dem elektrisch leitfähigem Material und der Terminierungsschicht, desto größer ist der Widerstand.

Durch den Chipaufbau im Multilayerdesign ist bei einer vorgegebenen Chipgeometrie der Widerstand maßgeblich über den Innenaufbau des Sensorchips eingestellt. Mittels des Aufbaus in Multilayertechnologie wird dabei sichergestellt, dass die Außengeometrie verschiedener Chips immer gleich bleibt.

Ferner kann durch eine genaue Bedruckung der Widerstand sehr gut eingestellt werden und somit hohe Genauigkeiten prozesstechnisch einfacher erreicht werden. Der hohe Ausschuss, welcher beim Herausschneiden des Chips aus einem Substrat entsteht, entfällt. Äußere Einflüsse durch die Verbindungstechnologie (beispielsweise Bonden) werden minimiert. Damit wird eine kostengünstige und stabile Sensorvorrichtung bereit gestellt.

In einer Ausführungsform weist die Sensorvorrichtung wenigstens eine Terminierungsschicht zur elektrischen Kontaktierung des elektrisch leitfähigen Materials bzw. der Innenelektroden auf. Die wenigstens eine Terminierungsschicht weist ein Edelmetall auf, beispielsweise Au oder Ag.

Die Sensorvorrichtung kann mehr als eine Terminierungsschicht aufweisen. Beispielsweise weist die Sensorvorrichtung zwei Terminierungsschichten auf. Diese Terminierungsschicht können gegenüberliegend auf unterschiedlichen Außenseiten der Sensorvorrichtung angeordnet sind. Die Terminierungsschicht ist bondbar. Mit anderen Worten, sie ist dazu ausgelegt mit einem Bonddraht verbunden zu werden.

Die Terminierungsschicht ist wenigstens an einer Oberseite der Sensorvorrichtung bzw. des Sensorchips ausgebildet. Die Oberseite der Sensorvorrichtung ist dabei jene Seite, von der aus die Sensorvorrichtung elektrisch kontaktiert wird, vorzugsweise mittels eines Bonddrahts. Zusätzlich kann auch noch eine Terminierungsschicht an einer Unterseite der Sensorvorrichtung bzw. des Sensorchips ausgebildet sein. Die wenigstens eine Terminierungsschicht ist dabei vorzugsweise auf die Oberseite und/oder die Unterseite der Sensorvorrichtung aufgedruckt oder aufgesputtert.

Die Terminierungsschicht bildet einen Schutz der Sensorvorrichtung vor externen Einflüssen. Ferner dient sie dazu die komplette Sensorvorrichtung zuverlässig nach Außen zu kontaktieren. Ferner wird durch die Terminierungsschicht eine elektrische Kontaktierung der Innenelektroden sichergestellt.

In einer Ausführungsform weist die Sensorvorrichtung wenigstens eine Dämpfungsschicht auf. Die Dämpfungsschicht ist bevorzugt unmittelbar auf wenigstens einem Teilbereich einer Außenfläche des Sensorchips aufgebracht. Unter Außenfläche wird dabei die Oberseite, die Unterseite sowie die Seitenflächen des Sensorchips verstanden.

Bevorzugt ist die Dämpfungsschicht direkt auf der Oberseite des Sensorchips aufgebracht, beispielsweise mittels Siebdruck. Besonders bevorzugt ist die Oberseite des Sensorchips vollständig mit der Dämpfungsschicht bedeckt.

Alternativ kann die Sensorvorrichtung eine innere Terminierungsschicht aufweisen, die zwischen der Dämpfungsschicht und dem Sensorchip angeordnet ist. Dabei kann die Dämpfungsschicht sandwichartig zwischen der inneren Terminierungsschicht und der oben genannten Terminierungsschicht angeordnet sein. Die innere Terminierungsschicht kann zur Kontaktierung des elektrischen Materials, das die Innenelektroden des Sensorchips bildet, dienen.

Alternativ oder zusätzlich kann die Dämpfungsschicht auch direkt auf die Unterseite des Sensorchips aufgebracht sein. Alternativ oder zusätzlich kann die Dämpfungsschicht auch direkt auf die Seitenflächen des Sensorchips aufgebracht sein. Unter "direkt" wird in diesem Zusammenhang verstanden, dass kein weiteres Material bzw. keine weitere Schicht zwischen dem Sensorchip und der Dämpfungsschicht angeordnet ist. Insbesondere ist die Dämpfungsschicht so ausgebildet, dass diese zwischen dem Sensorchip und der Terminierungsschicht angeordnet ist.

Die Dämpfungsschicht führt zu einer höheren mechanische Beständigkeit des Sensorchips gegenüber den Standardchips. Dadurch können die mechanischen Kräfte, die beim Bondprozess auftreten, aufgefangen und besser verteilt werden und es kommt bei dem Sensorchip zu geringeren Beschädigungen. Damit wird ein robustes und kostengünstiges Bauelement zur Verfügung gestellt.

In einer Ausführungsform weist die Dämpfungsschicht ein Material auf, welches eine größere Elastizität aufweist als ein Material der Terminierungsschicht. Damit können die beim Bondprozess auftretenden mechanischen Kräfte zuverlässig kompensiert werden. Beispielsweise weist die Dämpfungsschicht ein leitfähiges Polymer oder ein mit Silberpartikeln gefülltes Epoxidharz auf.

Gemäß einem weiteren Aspekt wird ein Verfahren zur Herstellung einer Sensorvorrichtung beschrieben. Vorzugsweise wird durch das Verfahren die oben beschriebene Sensorvorrichtung hergestellt. Alle Eigenschaften, die in Bezug auf die Sensorvorrichtung oder das Verfahren offenbart sind, sind auch entsprechend in Bezug auf den jeweiligen anderen Aspekt offenbart und umgekehrt, auch wenn die jeweilige Eigenschaft nicht explizit im Kontext des jeweiligen Aspekts erwähnt wird. Das Verfahren weist die folgenden Schritte auf:
A) Bereitstellen von Keramikfolien. Es wird eine Vielzahl von keramischen Folien zur Verfügung gestellt, wobei die Folien ein Material aufweisen, welche eine NTC Charakteristik aufweist.
B) Bedrucken eines Teils der Keramikfolien mit elektrisch leitfähigen Material zur Ausbildung von bedruckten keramischen Schichten und unbedruckten keramischen Schichten. Das elektrisch leitfähige Material fungiert in der fertigen Vorrichtung als Innenelektroden des Sensorchips. Das elektrisch leitfähige Material wird vorzugsweise mittels Siebdruck auf einen Teilbereich der Folien aufgedruckt, um die bedruckten keramischen Schichten herzustellen. Beispielsweise weist das elektrisch leitfähige Material Palladium, Platin, Kupfer, Gold oder Silber auf.

Die keramischen Folien werden äußerst präzise mit dem elektrisch leitfähigen Material in einer vorgegeben Geometrie bedruckt. Durch das präzise Bedrucken kann der Widerstand des Sensorchips bestimmt werden. Insbesondere wird durch den Überlappbereich des elektrisch leitfähigen Materials in Stapelrichtung der Widerstand des Chips und damit der Sensorvorrichtung bestimmt.

C) Übereinander Anordnen der bedruckten und unbedruckten Keramikfolien zur Ausbildung eines Stapels. Dabei können bedruckte und unbedruckte keramische Folien alternierend übereinander angeordnet werden. Bevorzugt wird zwischen zwei bedruckten Folien eine Mehrzahl von unbedruckten Folien angeordnet. Betrachtet in Stapelrichtung bildet das elektrisch leitfähige Material der bedruckten Folien dabei einen Überlappbereich.

D) Ausschneiden (Cutten) einer gewünschten Geometrie aus dem Stapel zur Ausbildung eines Sensorchips. Dabei kann eine Vielzahl von Sensorchips mit einer vorbestimmten Geometrie präzise aus dem Stapel ausgeschnitten werden.

E) Sintern des Sensorchips. Insbesondere erfolgt dieser Schritt vor dem Aufbringen von Terminierungs- und Dämpfungsschicht.

F) Ausbildung wenigstens einer Dämpfungsschicht auf wenigstens einem Teilbereich einer Außenfläche des Sensorchips. Bevorzugt wird die Dämpfungsschicht unmittelbar auf die Oberseite (Großfläche des Sensorchips) aufgedruckt, beispielsweise mittels Siebdruck. Die Dämpfungsschicht kann alternativ oder zusätzlich auch unmittelbar auf die Unterseite und/oder die Seitenflächen des Sensorchips aufgedruckt werden. Die Dämpfungsschicht kann ein leitfähiges Polymer oder ein mit Silberpartikeln gefülltes Epoxidharz aufweisen. Die Dämpfungsschicht erhöht die mechanische Stabilität des Sensorchips und macht ihn weniger anfällig für die beim Bonding auftretenden Kräfte.

G) Aufbringen von einem weiteren elektrisch leitfähigen Material auf einem Teilbereich der Außenfläche des Sensorchips und/oder auf der Dämpfungsschicht zur Ausbildung wenigstens einer Terminierungsschicht. Dieses weitere elektrisch leitfähige Material weist ein Edelmetall, beispielsweise Silber oder Gold auf. Das weitere elektrisch leitfähige Material wird entweder aufgedruckt oder aufgesputtert. Das Material kann entweder direkt auf eine Oberfläche des Sensorchips aufgebracht werden oder, im Falle des Vorhandenseins der Dämpfungsschicht an der betreffenden Oberfläche, direkt auf eine Oberfläche der Dämpfungsschicht.

Die Terminierungsschicht bildet die äußerste Schicht der Sensorvorrichtung. Die Terminierungsschicht ist dazu ausgebildet mit einem Bonddraht verbunden zu werden zur elektrischen Kontaktierung der Sensorvorrichtung.

Nach Schritt E) und vor Schritt F) kann eine innere Terminierungsschicht (15) auf dem Sensorchip (16) erzeugt werden, wobei in Schritt F) die Dämpfungsschicht (14) unmittelbar auf der inneren Terminierungsschicht erzeugt wird.

H) Elektrisches Kontaktieren der Sensorvorrichtung. In diesem Schritt kann ein Bonddraht auf eine Oberfläche der Terminierungsschicht aufgebracht werden. Alternativ kann die Sensorvorrichtung durch eine Sinterverbindung oder eine Lötverbindung kontaktiert werden.

Die durch das Verfahren hergestellte Sensorvorrichtung zeichnet sich durch besondere Robustheit aus. Durch die Dämpfungsschicht können die beim Bonden auftretenden mechanischen Kräfte aufgefangen und optimal verteilt werden. Ferner lässt sich bei dieser Vorrichtung der Widerstand präzise durch den Innenaufbau des Sensorchips einstellen.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.

Es zeigen:
- Figur 1: eine Sensorvorrichtung gemäß dem Stand der Technik
- Figur 2: einen Teilaspekt eines Sensorvorrichtung gemäß einer Ausführungsform,
- Figur 3a: einen Teilaspekt eines Sensorvorrichtung gemäß einer weiteren Ausführungsform,
- Figur 3b: einen Teilaspekt eines Sensorvorrichtung gemäß einer weiteren Ausführungsform,
- Figur 3c: einen Teilaspekt eines Sensorvorrichtung gemäß einer weiteren Ausführungsform,
- Figur 4: eine Sensorvorrichtung gemäß einer Ausführungsform.
- Figur 5: eine Sensorvorrichtung gemäß einer weiteren Ausführungsform.

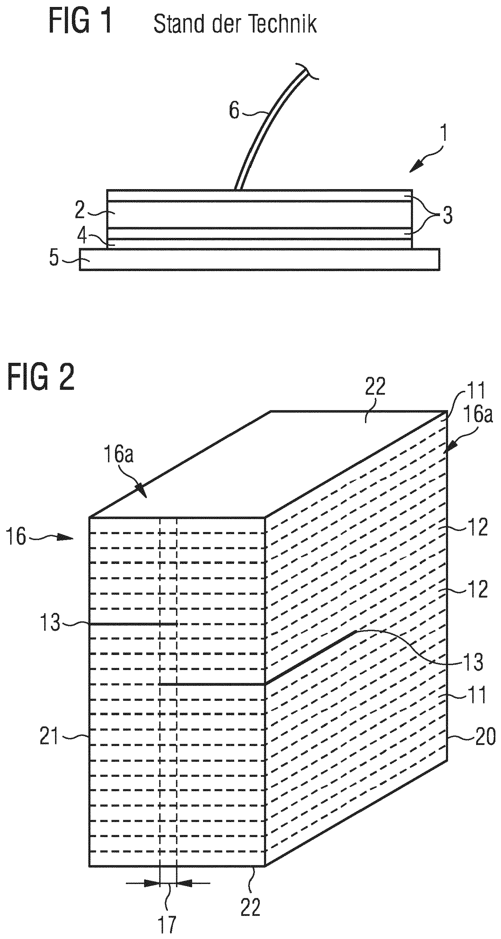

Die Figur 1 zeigt eine Sensorvorrichtung 1 gemäß dem Stand der Technik. Die Sensorvorrichtung 1 weist einen Chip 2, insbesondere einen Keramikchip 2, auf. Beispielsweise ist der Chip 2 ein NTC Chip und die Sensorvorrichtung 1 wird zur Temperaturmessung verwendet. Diese Sensorvorrichtung 1 findet Anwendung beispielsweise in Hochleistungsmodulen wie PIMs.

Der Chip 2 ist mit Hilfe von Terminierungsschichten 3 aus Edelmetallen (beispielsweise Ag oder Au) mittels eines Sinterprozesses (zum Beispiel Sintersilber 4) auf ein Substrat 5 aufgebracht.

Der Chip 2 wird daraufhin mittels eines Bonddrahtes 6 auf der Oberfläche kontaktiert, wobei die Terminierungsschicht 3 an das Bondmaterial und die Bondtechnologie (Drahtdicke etc.) angepasst sein muss. Die Terminierungsschichten 3 werden meistens durch Sputtern oder Siebdruck aufgebracht.

Der Chip 2 wird in der Regel aus einem gesinterten und polierten Substrat herausgeschnitten. Der Widerstand des Chips 2 bzw. der Sensorvorrichtung 1 wird durch die Geometrie des Chips 2 ausgesteuert. Besonders für enge Widerstandstoleranzen ist dieser Prozess relativ aufwendig, da die Geometrie einen sehr großen Einfluss hat. Dadurch ist dieser Prozess ausschussbehaftet und aufwändig.

Auch ist die Geometrie der einzelnen Chips 2 nicht einheitlich da die Chips 2 aus jedem Keramiksubstrat leicht unterschiedliche Geometrien haben können. Ferner kann es beim Herausschneiden zu Beschädigungen des Chips 2 kommen.

Ferner können - abhängig von der Bonding Technologie und den für die Sensorvorrichtung 1 ausgewählten Prozessparametern - sehr hohe Kräfte auf den Chip 2 wirken, wodurch es zu Beschädigungen bis zum kompletten Bruch des Chips 2 kommen kann.

Bei der im Folgenden beschriebenen Sensorvorrichtung bzw. den Teilaspekten der Sensorvorrichtung wird ein Chip mit einem Multilayerprozess und Innenelektroden aufgebaut, um den Widerstand maßgeblich über den Innenaufbau des Chips einzustellen zu können. Damit werden äußere Einflüsse durch die Verbindungstechnologie minimiert.

Ferner wird im Folgenden eine Oberflächenterminierung des Sensorchips vorgeschlagen, die es dem Sensorchip und damit der gesamten Sensorvorrichtung ermöglicht, höhere Kräfte beim Bondprozess ohne Beschädigungen auszuhalten.

Die Figur 2 zeigt einen Teilaspekt einer Sensorvorrichtung 10 gemäß einer Ausführungsform. Insbesondere zeigt die Figur 2 einen Sensorchip 16 der Sensorvorrichtung 10. Der Sensorchip 16 weist eine Vielzahl von keramischen Schichten 11, 12 auf.

Der Sensorchip 16 ist ein Multilayer Chip. Insbesondere ist der Sensorchip 16 ein Multilayer NTC Chip. Mit anderen Worten, die keramischen Schichten 11, 12 weisen ein Material mit NTC Charakteristik auf. Der Sensorchip 16 bzw. die Sensorvorrichtung 10 ist damit zur Messung einer Temperatur ausgebildet. Die Sensorvorrichtung 10 ist dazu ausgebildet in Hochleistungsmodulen wie PIMs Anwendung zu finden.

Der Sensorchip 16 weist eine Vielzahl von unbedruckten keramischen Schichten 11 auf. Der Sensorchip 16 weist ferner eine Vielzahl von bedruckten keramischen Schichten 12 auf. Die jeweilige bedruckte keramische Schicht 12 ist mit einem elektrisch leitfähigen Material 13, beispielsweise Ag oder Au oder Cu, bedruckt.

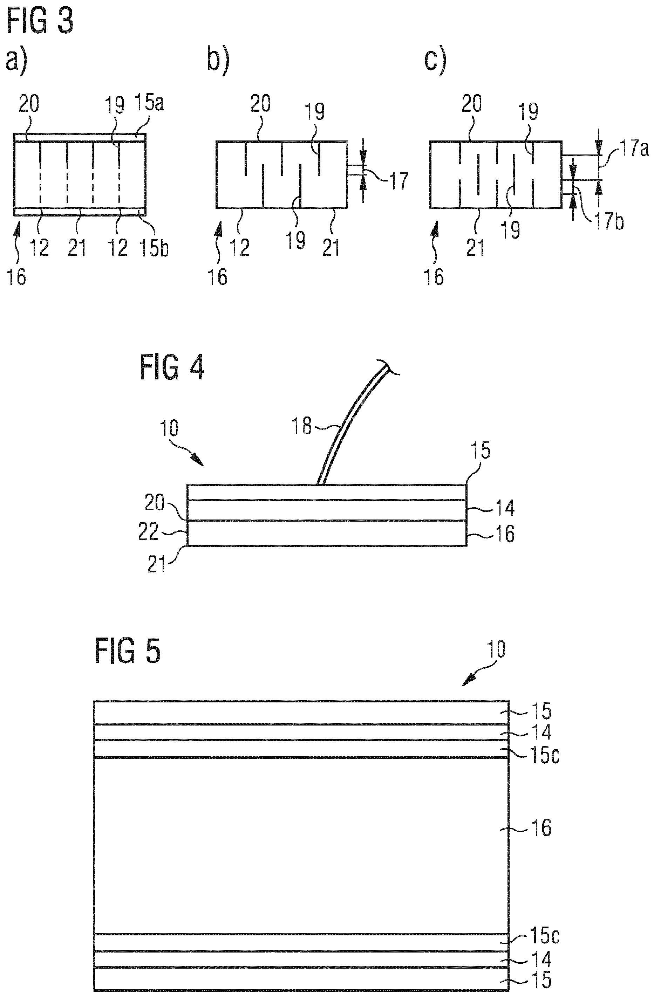

Die jeweilige bedruckte keramische Schicht 12 ist nur teilweise mit dem elektrisch leitfähigen Material 13 bedruckt. Das elektrisch leitfähige Material 13 reicht dabei jeweils bis zu einem Randbereich der jeweiligen bedruckten keramischen Schicht 12. Das elektrisch leitfähige Material 13 bildet die Innenelektroden 19 des Sensorchips 16 (siehe hierzu auch die Figuren 3a bis 3c).

Bedruckte und unbedruckte Schichten 11, 12 können beispielsweise alternierend angeordnet sein. Vorzugsweise folgt auf eine bedruckte keramische Schicht 12 eine Mehrzahl von unbedruckten keramischen Schichten 11.

Die keramischen Schichten 12 sind derart mit dem elektrisch leitfähigen Material 13 bedruckt und anschließend gestapelt, dass die Innenelektroden 19 bzw. das elektrisch leitfähige Material 13 der bedruckten keramischen Schichten 12 zumindest teilweise überlappt. Mit anderen Worten, das Material 13 bildet einen Überlappbereich 17 in Stapelrichtung. Durch den Überlappbereich 17, insbesondere durch eine Größe des Überlappbereichs 17 (Ausdehnung des Überlappbereichs 17 senkrecht zur Stapelrichtung), wird der Widerstand des Sensorchips 16 bestimmt. Je größer der Überlappbereich 17, also je größer die Ausdehnung des Überlappbereichs 17 senkrecht zur Stapelrichtung, desto geringer ist der Widerstand. Je kleiner der Überlappbereich 17, desto größer ist der Widerstand.

Der Sensorchip 16 weist eine Außenfläche 16a auf. Die Außenfläche 16a wird gebildet durch zwei gegenüberliegende großflächige Seiten, welche in der Sensorvorrichtung 10 die Oberseite 20 bzw. die Unterseite 21 des Sensorchips 16 bilden. Die Außenfläche 16a wird ferner gebildet durch die Seitenflächen 22 des Sensorchips 16.

Zur elektrischen Kontaktierung der Innenelektroden 19 sind Terminierungsschichten 15 bereitgestellt (nicht explizit dargestellt, siehe Figur 4). Die jeweilige Terminierungsschicht 15 weist ein Edelmetall, beispielsweise Au oder Ag auf.

Insbesondere ist vorzugsweise eine Terminierungsschicht 15 an der Oberseite 20 und eine Terminierungsschicht 15 an der Unterseite 21 ausgebildet. Alternativ dazu kann beispielsweise auch nur an der Oberseite 20 eine Terminierungsschicht 15 ausgebildet sein. Im Gegensatz zu den bekannten Multilayerchips sind die Innenelektroden 19 (elektrisch leitfähiges Material 13) damit über die "Großflächen" (Oberseite 20 und/oder Unterseite 21 des Sensorchips 16) kontaktiert.

Dabei muss die Terminierungsschicht 15 nicht in unmittelbarem Kontakt mit einer Außenfläche 16a des Sensorchips 16 stehen. Vorzugsweise ist zwischen dem Sensorchip 16 und der Terminierungsschicht 15 eine weitere Schicht, insbesondere eine Dämpfungsschicht 15, ausgebildet, welche in Zusammenhang mit der Figur 4 im Detail beschrieben wird.

Durch den Aufbau des Sensorchips 16 in Multilayertechnologie kann gewährleistet werden, dass die Außengeometrie verschiedener Sensorchips 16 immer gleich ist, da ein Herausschneiden aus einem Keramiksubstrat entfällt. Ferner kann durch eine genaue Bedruckung der keramischen Schichten 12 der Widerstand sehr gut eingestellt werden. Somit können hohe Genauigkeiten prozesstechnisch einfacher erreicht werden.

Alle bekannten Designvarianten für Multilayertechnologie können auf dieses Design für Sensorchips 16 übertragen werden, wie den Figuren 3a bis 3c entnommen werden kann.

Dabei zeigt die Figur 3a einen Sensorchip 16 mit Innenelektroden 19 im so genannten Gapdesign. Auf einer Oberseite 20 des Sensorchips 16 ist eine erste Terminierungsschicht 15a angeordnet. Auf einer Unterseite 21 des Sensorchips 16 weist ist eine zweite Terminierungsschicht 15b angeordnet.

Hierbei ist ein vorbestimmter Teilbereich der jeweiligen bedruckten keramischen Schicht 12 (hier beispielsweise der an die Unterseite 21 des Sensorchips 16 angrenzende Teilbereich) komplett frei von Innenelektroden. An diesen Teilbereich der keramischen Schicht 12 schließt sich die zweite Terminierungsschicht 15b an. Auf einem weiteren vorbestimmten Teilbereich (in diesem Ausführungsbeispiel der an die Oberseite 20 angrenzende Teilbereich) der bedruckten Schicht 12 sind Innenelektroden 19 ausgebildet. Die Innenelektroden 19 sind über die erste Terminierungsschicht 15a elektrisch kontaktiert. Alle Innenelektroden 19 weisen die gleiche Polarität auf. Ein aktives Volumen des Sensorchips wird zwischen den Enden der Innenelektroden 19, die zur Unterseite 21 hinweisen, und der zweiten Terminierungsschicht 15b ausgebildet. Eine Ausdehnung der Innenelektroden 19 / des elektrisch leitfähigen Materials 13 senkrecht zur Stapelrichtung bestimmt dabei die Größe des aktiven Volumens. Ein Überlappbereich 17 von Innenelektroden 19 unterschiedlicher Polarität ist in diesem Ausführungsbeispiel nicht vorgesehen.

Die Figur 3b zeigt ein Sensorchip 16 mit Innenelektroden 19 (elektrisch leitfähiges Material 13) im Überlappdesign, wie bereits im Zusammenhang mit Figur 2 dargestellt. Hierbei sind unterschiedliche Teilbereiche von keramischen Schichten 12 mit elektrisch leitfähigen Material 13 bedruckt und in einem Stapel angeordnet. So weisen erste keramische Schichten 12 einen bedruckten Teilbereich auf, welcher von einem Mittelbereich der jeweiligen keramischen Schicht 12 bis an die Oberseite 20 des Sensorchips 16 ragt. Zweite keramische Schichten 12 weisen einen bedruckten Teilbereich auf, welcher von einem Mittelbereich der betreffenden keramischen Schicht 12 bis an die Unterseite 21 des Sensorchips 16 ragt. Die bedruckten Bereiche bzw. die Innenelektroden 19 überlappen sich in Stapelrichtung (Überlappbereich 17).

In diesem Ausführungsbeispiel weist die Sensorvorrichtung 10 vorzugsweise wenigstens zwei Terminierungsschichten 15 auf. Diese Terminierungsschichten 15 sind an der Oberseite und an der Unterseite der Sensorvorrichtung 10 bzw. des Sensorchips 16 ausgebildet.

Die Figur 3c zeigt ein Sensorchip 16 mit Serienverschaltung der Innenelektroden 19. Hierbei weisen erste keramische Schichten 12 zwei bedruckte Teilbereiche auf. Einer dieser Teilbereiche ragt von einem Mittelbereich der jeweiligen keramischen Schicht 12 bis an die Oberseite 20 des Sensorchips 16. Der weitere Teilbereich ragt vom Mittelbereich der betreffenden keramischen Schicht 12 bis an die Unterseite 21 des Sensorchips 16. Dabei bildet der von dem Mittelbereich bis zur Oberseite 20 reichende Teilbereich erste Innenelektroden 19a. Der von dem Mittelbereich bis zur Unterseite reichende Teilbereich bildet zweite Innenelektroden 19b. Je eine erste und eine zweite Innenelektroden 19a, 19b sind in einer Ebene angeordnet und berühren einander nicht.

Zweite keramische Schichten weisen hingehen nur einen bedruckten Teilbereich (hier der Mittelbereich) auf. Auf den zweiten keramischen Schichten werden durch die nur im Mittelbereich angeordnete Bedruckung schwebende Elektroden 19c (engl.: "floating electrode") ausgebildet, die nicht mit einer Terminierungsschicht elektrisch verbunden sind.

Der Sensorchip 16 weist zwei Terminierungsschichten 15a, 15b auf. Die erste Terminierungsschicht 15a ist auf der Oberseite 20 angeordnet und mit den ersten Innenelektroden 19a verbunden, die an die Oberseite 20 heranreichen. Die zweite Terminierungsschicht 15b ist auf der Unterseite 21 angeordnet und mit den zweiten Innenelektroden 19b verbunden, die an die Unterseite 21 heranreichen.

Dadurch ergeben sich zwei Überlappbereiche 17 der Innenelektroden 19. Insbesondere liegt hierbei ein erster Überlappbereich 17a vor, welcher in einem Bereich des Sensorchips 16 ausgebildet ist, welcher sich näher an der Oberseite 20 befindet. Der erste Überlappungsbereich wird durch den Überlapp der ersten Innenelektroden 19a und der schwebenden Elektroden 19c gebildet. Ein zweiter Überlappbereich 17b befindet sich näher an der Unterseite 21 des Sensorchips. Der zweite Überlappungsbereich wird durch den Überlapp der zweiten Innenelektroden 19b und der schwebenden Elektroden 19c gebildet. Die Überlappbereiche 17a, 17b addieren sich zu einem Gesamtüberlappbereich 17.

Die Figur 4 beschreibt eine Sensorvorrichtung 10 gemäß einer Ausführungsform.

Die Sensorvorrichtung 10 weist einen in Zusammenhang mit den Figuren 2 und 3a bis 3c beschriebenen Sensorchip 16 auf. Der Sensorchip 16 ist ein NTC Chip in Multilayertechnologie. Der Widerstand des Sensorchips 16 wird, wie oben beschrieben durch die Größe des Überlappbereichs 17 der Innenelektroden 19 beschrieben.

Der Sensorchip 16 weist die Außenfläche 16a auf, welche durch die Oberseite 20, die Unterseite 21 und die Seitenflächen 22 gebildet wird (siehe hierzu auch Figur 2).

Der Sensorchip 16 weist ferner eine Dämpfungsschicht 14 auf. Die Dämpfungsschicht 14 steht in direktem mechanischen Kontakt mit dem Sensorchip 16. Die Dämpfungsschicht 14 ist vorzugsweise mittels Siebdruck auf den Sensorchip 16 aufgebracht.

Die Dämpfungsschicht 14 ist dazu ausgebildet und angeordnet eine höhere mechanische Beständigkeit des Sensorchips 16 gegenüber Standardchips zu gewährleisten. Dadurch können die mechanischen Kräfte, die beim Bondprozess auftreten, aufgefangen und besser verteilt werden. Infolgedessen kommt es bei dem Sensorchip 16 zu geringeren Beschädigungen im Vergleich zu Standardchips.

Die Dämpfungsschicht 14 weist ein elektrisch leitfähiges Polymer auf. Beispielsweise kann die Dämpfungsschicht 14 Poly-3,4-ethylendioxythiophen (PEDOT bzw. PEDT) aufweisen. Die Dämpfungsschicht 14 kann ferner Polystyrolsulfonat (PSS) aufweisen. Die Dämpfungsschicht 14 weist als leitfähiges Polymer Polyparaphenylen (PPP) auf.

In einem alternativen Ausführungsbeispiel kann die Dämpfungsschicht 14 auch ein mit Ag Partikeln gefülltes Epoxidharz aufweisen.

In diesem Ausführungsbeispiel ist die Dämpfungsschicht 14 unmittelbar auf der Oberseite 20 des Sensorchips 16 ausgebildet. Alternativ oder zusätzlich kann die Dämpfungsschicht 14 auch unmittelbar an der Unterseite 21 des Sensorchips 16 ausgebildet sein.

Die Sensorvorrichtung 10 weist ferner wenigstens eine Terminierungsschicht 15 auf. Vorzugsweise weist die Sensorvorrichtung 10 zwei Terminierungsschichten 15 auf. Diese sind vorzugsweise an gegenüberliegenden Außenflächen der Sensorvorrichtung 10 ausgebildet (nicht explizit dargestellt).

Die Dämpfungsschicht 14 ist zwischen dem Sensorchip 16 und der Terminierungsschicht 15 angeordnet. Mit anderen Worten, die Terminierungsschicht 15 ist auf der Dämpfungsschicht 14 aufgebracht, beispielsweise mittels Sputtern oder Siebdruck. Die Terminierungsschicht 15 weist ein elektrisch leitfähiges Material, nämlich ein Edelmetall auf. Die Terminierungsschicht 15 weist beispielsweise Au oder Ag auf. Die Terminierungsschicht 15 dient der elektrischen Kontaktierung der Innenelektroden 19.

Vorzugsweise weist die Dämpfungsschicht 14 eine größere Dicke (in diesem Fall Ausdehnung senkrecht zur Stapelrichtung) auf, als die Terminierungsschicht 15. Ferner weist das Material der Dämpfungsschicht 14 eine größere Elastizität auf, als das Material der Terminierungsschicht 15. Auf diese Weise kann der Sensorchip 16 größere mechanische Belastungen beim Bondprozess kompensieren, als dies bei Standardchips der Fall ist.

Zur elektrischen Kontaktierung weist die Sensorvorrichtung ferner einen Bonddraht 18 auf. Der Bonddraht 18 ist direkt mit einer Oberfläche der Terminierungsschicht 15 verbunden.

Figur 5 zeigt ein weiteres Ausführungsbeispiel der Sensorvorrichtung 10 in schematischer Ansicht. Die Sensorvorrichtung 10 weist zwei Dämpfungsschichten 14 auf, zwischen denen der Sensorchip 16 angeordnet ist. Dabei kann der Sensorchip 16 gemäß einer der im Zusammenhang mit den Figuren 3a bis 3c beschriebenen Ausführungsformen ausgebildet sein.

Jede der Dämpfungsschichten 14 ist sandwichartig von einer inneren Terminierungsschicht 15c, die zu dem Sensorchip 16 hinweist und unmittelbar an diesen anschließt, und einer äußeren Terminierungsschicht 15, die die Oberseite oder die Unterseite der Sensorvorrichtung 10 bildet, angeordnet. Die innere Terminierungsschicht 15c dient zur elektrischen Kontaktierung der Innenelektroden 19. Die äußere Terminierungsschicht 15 dient zur elektrischen Kontaktierung der Sensorvorrichtung 10, beispielsweise mittels eines Bonddrahts, mittels einer Sinterschicht oder mittels einer Lötschicht. Die Dämpfungsschichten 14 erhöhen die mechanische Stabilität der Sensorvorrichtung 10.

Im Folgenden wird ein Verfahren zur Herstellung einer Sensorvorrichtung 10 beschrieben. Vorzugsweise wird durch das Verfahren die Sensorvorrichtung 10 gemäß einem der oben beschriebenen Ausführungsbeispiele hergestellt. Alle Merkmale die in Zusammenhang mit der Sensorvorrichtung 10 beschrieben wurden, finden daher auch für das Verfahren Anwendung und umgekehrt.

In einem ersten Schritt A) wird eine Vielzahl von Keramikfolien bereitgestellt. Die Keramikfolien weisen ein Material mit NTC Charakteristik auf. Die Keramikfolien dienen als Basis zur Herstellung der bedruckten keramischen Schichten 12 und der unbedruckten keramischen Schichten 11.

In einem weiteren Schritt B) erfolgt das Bedrucken eines Teils der Keramikfolien mit elektrisch leitfähigen Material 13 zu Ausbildung der bedruckten keramischen Schichten 12. Die mit dem elektrisch leitfähigen Material 13 bedruckten Teilbereiche der bedruckten keramischen Schichten 12 bilden bei der fertigen Sensorvorrichtung 10 die Innenelektroden 19 des Sensorchips 16. Der Überlappbereich 17 zwischen den Innenelektroden 19 bestimmt den Widerstand des fertigen Sensorchips 16.

In einem weiteren Schritt C) werden die bedruckten und unbedruckten Keramikfolien übereinander zu einem Stapel angeordnet. Dabei folgt auf eine bedruckte Keramikfolie wenigstens eine, vorzugsweise eine Mehrzahl, von unbedruckten Keramikfolien (siehe hierzu auch Figur 2).

In einem weiteren Schritt D) erfolgt das Ausschneiden (Cutten) einer gewünschten bzw. vorgegebenen Geometrie aus dem Stapel zur Ausbildung des Sensorchips 16. Dabei kann eine Vielzahl von Sensorchips 16 mit der gleichen vorbestimmten Geometrie ausgeschnitten werden. Abweichungen in der Geometrie durch Ausschneiden der Chips aus einem Trägermaterial entfallen.

In einem weiteren Schritt E) wird der ausgeschnittene Stapel / Sensorchip 16 gesintert.

Anschließend wird einem Schritt F) wenigstens eine Dämpfungsschicht auf wenigstens einem Teilbereich der Außenfläche 16a des Sensorchips 16 aufgebracht, vorzugsweise mittels Siebdruck. Beispielsweise wird die Dämpfungsschicht 14 direkt auf die Oberseite 20 des Sensorchips 16 aufgedruckt. Vorzugsweise weist die Dämpfungsschicht 14 ein leitfähiges Polymer oder ein mit Silberpartikeln gefülltes Epoxidharz auf.

In einem nächsten Schritt G) wird ein weiteres elektrisch leitfähiges Material, ein Edelmetall, bereitgestellt, um wenigstens eine Terminierungsschicht 15 auszubilden. Die Terminierungsschicht 15 dient zur elektrischen Kontaktierung der Innenelektroden 19.

Das Material der Terminierungsschicht 15 wird beispielsweise auf die Dämpfungsschicht 14 und/oder auf einem Teilbereich der Außenfläche 16a (vorzugsweise auf die großflächigen Seiten, die die Oberseite 20 und die Unterseite 21 des Sensorchips 16 bilden) aufgebracht, beispielsweise mittels Sputtern oder mittels Siebdruck.

Vorzugsweise wird die Terminierungsschicht 15 direkt auf der Dämpfungsschicht 14 aufgebracht und bildet damit einen oberen Abschluss der Sensorvorrichtung 10. Zusätzlich wird vorzugsweise eine Terminierungsschicht 15 direkt auf der Unterseite 21 des Sensorchips 16 ausgebildet (sofern dort keine weitere Dämpfungsschicht 14 ausgebildet ist, in diesem Fall wird die weitere Terminierungsschicht 15 auf der Dämpfungsschicht 14 angeordnet).

In einem letzten Schritt H) wird die Sensorvorrichtung 10 elektrisch kontaktiert. Dies erfolgt durch Aufbringen eines Bonddrahts 18 auf eine Oberfläche der Terminierungsschicht 15. Auf Grund der zwischen Terminierungsschicht 15 und Sensorchip 16 ausgebildeten Dämpfungsschicht 14 können die dabei auftretenden mechanischen Belastungen weitgehend kompensiert und Beschädigungen am Sensorchip 16 damit vermieden werden.

Die Beschreibung der hier angegebenen Gegenstände ist nicht auf die einzelnen speziellen Ausführungsformen beschränkt. Vielmehr können die Merkmale der einzelnen Ausführungsformen - soweit technisch sinnvoll - beliebig miteinander kombiniert werden.

### Bezugszeichenliste

- 1: Sensorvorrichtung
- 2: Sensorchip
- 3: Terminierungsschicht
- 4: Sintersilber
- 5: Substrat
- 6: Bonddraht
- 10: Sensorvorrichtung
- 11: Unbedruckte Keramikschicht
- 12: Bedruckte Keramikschicht
- 13: Elektrisch leitfähiges Material
- 14: Dämpfungsschicht
- 15: Terminierungsschicht
- 15a: erste Terminierungsschicht
- 15b: zweite Terminierungsschicht
- 15c: innere Terminierungsschicht
- 16: Sensorchip
- 16a: Außenfläche
- 17: Überlappbereich
- 17a: Erster Überlappbereich
- 17b: Zweiter Überlappbereich
- 18: Bonddraht
- 19: Innenelektroden
- 19a: erste Innenelektroden
- 19b: zweite Innenelektroden
- 19c: schwebende Elektroden
- 20: Oberseite des Sensorchips
- 21: Unterseite des Sensorchips
- 22: Seitenfläche des Sensorchips

## Patentansprüche

1. Sensorvorrichtung (10) aufweisend einen Sensorchip (16), wobei der Sensorchip (16) eine Vielzahl von bedruckten keramischen Schichten (12) und unbedruckten keramischen Schichten (11) aufweist,
wobei die Sensorvorrichtung (10) wenigstens eine Terminierungsschicht (15, 15a, 15b) zur elektrischen Kontaktierung des elektrisch leitfähigen Materials (13) aufweist, wobei die Terminierungsschicht (15, 15a, 15b) wenigstens an einer Oberseite (20) und/oder an einer Unterseite (21) des Sensorchips (16) ausgebildet ist,
wobei die bedruckten keramischen Schichten (12) zumindest teilweise mit einem elektrisch leitfähigen Material (13) bedruckt sind, und wobei ein elektrischer Widerstand des Sensorchips (16) durch einen Überlappbereich (17) des elektrisch leitfähigen Materials (13) oder durch einen Abstand des elektrisch leitfähigen Materials (13) zu der Terminierungsschicht (15, 15a ,15b) bestimmt ist,
wobei die Sensorvorrichtung (10) wenigstens eine Dämpfungsschicht (14) aufweist, wobei die Dämpfungsschicht (14) unmittelbar auf wenigstens einem Teilbereich einer Außenfläche (16a) des Sensorchips (16) aufgebracht ist, und wobei die Dämpfungsschicht (14) ein Material aufweist, welches eine größere Elastizität aufweist als ein Material der Terminierungsschicht (15),
**dadurch gekennzeichnet, dass** die Dämpfungsschicht (14) ein leitfähiges Polymer aufweist und wobei die Dämpfungsschicht (14) Polyparaphenylen aufweist und wobei die wenigstens eine Terminierungsschicht (15) ein Edelmetall aufweist.

2. Sensorvorrichtung (10) gemäß Anspruch 1,
wobei die wenigstens eine Terminierungsschicht (15) aufgedruckt oder aufgesputtert ist.

3. Sensorvorrichtung (10) gemäß einem der vorangehenden Ansprüche,
wobei die wenigstens eine Dämpfungsschicht (14) zwischen dem Sensorchip (16) und der Terminierungsschicht (15) ausgebildet ist.

4. Sensorvorrichtung (10) gemäß einem der vorangehenden Ansprüche,
wobei die Sensorvorrichtung (10) eine innere Terminierungsschicht (15c) aufweist, die zwischen der wenigstens eine Dämpfungsschicht (14) und dem Sensorchip (16) angeordnet ist.

5. Sensorvorrichtung (10) gemäß einem der vorangehenden Ansprüche,
wobei die Dämpfungsschicht (14) mit Hilfe von Siebdruck auf wenigstens einen Teilbereich der Außenfläche (16a) des Sensorchips (16) aufgebracht ist.

6. Sensorvorrichtung (10) gemäß einem der vorangehenden Ansprüche,
wobei die Sensorvorrichtung (10) zur Messung einer Temperatur ausgebildet ist.

7. Sensorvorrichtung (10) gemäß einem der vorangehenden Ansprüche,
wobei der Sensorchip (16) ein NTC Multilayer Chip ist.

8. Verfahren zur Herstellung einer Sensorvorrichtung (10) aufweisend die folgenden Schritte:
A) Bereitstellen von Keramikfolien;
B) Bedrucken eines Teils der Keramikfolien mit elektrisch leitfähigen Material (13) zur Ausbildung von bedruckten keramischen Schichten (12) und unbedruckten keramischen Schichten (11) ;
C) Übereinander Anordnen der bedruckten und unbedruckten Keramikfolien zur Ausbildung eines Stapels;
D) Ausschneiden einer gewünschten Geometrie aus dem Stapel zur Ausbildung eines Sensorchips (16);
E) Sintern des Sensorchips (16);
F) Ausbildung wenigstens einer Dämpfungsschicht (14) auf wenigstens einem Teilbereich einer Außenfläche (16a) des Sensorchips (16), wobei die Dämpfungsschicht (14) ein leitfähiges Polymer aufweist und wobei die Dämpfungsschicht (14) Polyparaphenylen aufweist;
G) Aufbringen von einem weiteren elektrisch leitfähigen Material auf einem Teilbereich der Außenfläche (16a) des Sensorchips (16) und/oder auf der Dämpfungsschicht (14) zur Ausbildung wenigstens einer Terminierungsschicht (15), wobei die wenigstens eine Terminierungsschicht (15) ein Edelmetall aufweist.

9. Verfahren nach einem der Anspruch 8,
wobei die Dämpfungsschicht (14) mit Hilfe von Siebdruck auf wenigstens einen Teilbereich der Außenfläche (16a) des Sensorchips (16) aufgebracht wird.

10. Verfahren nach einem der Ansprüche 8 oder 9,
wobei die Keramikfolien ein Material mit NTC Charakteristik aufweisen.

11. Verfahren nach einem der Ansprüche 8 bis 10,
wobei nach Schritt E) und vor Schritt F) eine innere Terminierungsschicht (15) auf dem Sensorchip (16) erzeugt wird, und wobei in Schritt F) die Dämpfungsschicht (14) unmittelbar auf der inneren Terminierungsschicht (15c) erzeugt wird.

12. Verfahren nach einem der Ansprüche 8 bis 11,
ferner aufweisend den Schritt
H) Elektrisches Kontaktieren der Sensorvorrichtung (10), wobei die Sensorvorrichtung (10) durch Aufbringen eines Bonddrahts (18) auf eine Oberfläche der Terminierungsschicht (15) oder durch eine Sinterverbindung oder durch eine Lötverbindung elektrisch kontaktiert wird.

13. Verfahren nach einem der Ansprüche 8 bis 12,
wobei die Dämpfungsschicht (14) ein Material aufweist, welches eine größere Elastizität aufweist als ein Material der Terminierungsschicht (15).

## Claims

1. Sensor device (10) having a sensor chip (16),
wherein the sensor chip (16) has a plurality of printed ceramic layers (12) and unprinted ceramic layers (11),
wherein the sensor device (10) has at least one termination layer (15, 15a, 15b) for electrically contacting the electrically conductive material (13), wherein the termination layer (15, 15a, 15b) is formed at least on an upper side (20) and/or on an underside (21) of the sensor chip (16),
wherein the printed ceramic layers (12) are at least partially printed with an electrically conductive material (13), and wherein an electrical resistance of the sensor chip (16) is determined by an overlap region (17) of the electrically conductive material (13) or by a distance between the electrically conductive material (13) and the termination layer (15, 15a, 15b),
wherein the sensor device (10) has at least one damping layer (14), wherein the damping layer (14) is applied directly to at least one section of an outer surface (16a) of the sensor chip (16), and wherein the damping layer (14) has a material having a greater elasticity than a material of the termination layer (15),
**characterized in that** the damping layer (14) has a conductive polymer, and wherein the damping layer (14) has polyparaphenylene, and wherein the at least one termination layer (15) has a precious metal.

2. Sensor device (10) according to claim 1,
wherein the at least one termination layer (15) is printed on or sputtered on.

3. Sensor device (10) according to any one of the preceding claims,
wherein the at least one damping layer (14) is formed between the sensor chip (16) and the termination layer (15).

4. Sensor device (10) according to any one of the preceding claims,
wherein the sensor device (10) has an inner termination layer (15c) arranged between the at least one damping layer (14) and the sensor chip (16).

5. Sensor device (10) according to any one of the preceding claims,
wherein the damping layer (14) is applied to at least one section of the outer surface (16a) of the sensor chip (16) with the aid of screen printing.

6. Sensor device (10) according to any one of the preceding claims,
wherein the sensor device (10) is designed to measure a temperature.

7. Sensor device (10) according to any one of the preceding claims,
wherein the sensor chip (16) is an NTC multilayer chip.

8. Method for producing a sensor device (10), comprising the following steps:
A) providing ceramic films;
B) printing a portion of the ceramic films with electrically conductive material (13) in order to form printed ceramic layers (12) and unprinted ceramic layers (11);
C) arranging the printed and unprinted ceramic films one above the other in order to form a stack;
D) cutting a desired geometry out of the stack in order to form a sensor chip (16);
E) sintering the sensor chip (16);
F) forming at least one damping layer (14) on at least one section of an outer surface (16a) of the sensor chip (16), wherein the damping layer (14) has a conductive polymer, and wherein the damping layer (14) has polyparaphenylene;
G) applying a further electrically conductive material to a section of the outer surface (16a) of the sensor chip (16) and/or to the damping layer (14) in order to form at least one termination layer (15), wherein the at least one termination layer (15) has a precious metal.

9. Method according to claim 8,
wherein the damping layer (14) is applied to at least one section of the outer surface (16a) of the sensor chip (16) with the aid of screen printing.

10. Method according to any one of claims 8 and 9,
wherein the ceramic films have a material having an NTC characteristic.

11. Method according to any one of claims 8 to 10,
wherein, after step E) and before step F), an inner termination layer (15) is produced on the sensor chip (16), and wherein, in step F), the damping layer (14) is produced directly on the inner termination layer (15c).

12. Method according to any one of claims 8 to 11,
further comprising the step of
H) electrically contacting the sensor device (10), wherein electrically contacting of the sensor device (10) is made by applying a bonding wire (18) to a surface of the termination layer (15) or by a sintered connection or by a soldered connection.

13. Method according to any one of claims 8 to 12,
wherein the damping layer (14) has a material having a greater elasticity than a material of the termination layer (15).

## Revendications

1. Dispositif capteur (10) comprenant une puce capteur (16),
la puce capteur (16) présentant une pluralité de couches céramiques imprimées (12) et de couches céramiques non imprimées (11),
le dispositif capteur (10) présentant au moins une couche de terminaison (15, 15a, 15b) destinée au contact électrique du matériau électriquement conducteur (13), la couche de terminaison (15, 15a, 15b) étant réalisée au moins sur un côté supérieur (20) et/ou sur un côté inférieur (21) de la puce capteur (16),
les couches céramiques imprimées (12) étant imprimées au moins partiellement avec un matériau électriquement conducteur (13), et une résistance électrique de la puce capteur (16) étant déterminée par une zone de chevauchement (17) du matériau électriquement conducteur (13) ou par une distance entre le matériau électriquement conducteur (13) et la couche de terminaison (15, 15a, 15b),
le dispositif capteur (10) présentant au moins une couche d'amortissement (14), la couche d'amortissement (14) étant appliquée directement sur au moins une zone partielle d'une surface extérieure (16a) de la puce capteur (16), et la couche d'amortissement (14) présentant un matériau qui présente une élasticité supérieure à celle d'un matériau de la couche de terminaison (15),
**caractérisé en ce que** la couche d'amortissement (14) présente un polymère conducteur, et la couche d'amortissement (14) présente du polyparaphénylène, et l'au moins une couche de terminaison (15) présente un métal noble.

2. Dispositif capteur (10) selon la revendication 1,
l'au moins une couche de terminaison (15) étant imprimée ou déposée par pulvérisation cathodique.

3. Dispositif capteur (10) selon l'une des revendications précédentes,
l'au moins une couche d'amortissement (14) étant réalisée entre la puce capteur (16) et la couche de terminaison (15).

4. Dispositif capteur (10) selon l'une des revendications précédentes,
le dispositif capteur (10) présentant une couche de terminaison interne (15c), qui est disposée entre l'au moins une couche d'amortissement (14) et la puce capteur (16).

5. Dispositif capteur (10) selon l'une des revendications précédentes,
l'au moins une couche d'amortissement (14) étant appliquée à l'aide d'une sérigraphie sur au moins une zone partielle de la surface extérieure (16a) de la puce capteur (16).

6. Dispositif capteur (10) selon l'une des revendications précédentes,
le dispositif capteur (10) étant conçu pour mesurer une température.

7. Dispositif capteur (10) selon l'une des revendications précédentes,
la puce capteur (16) étant une puce multicouche NTC.

8. Procédé de fabrication d'un dispositif capteur (10) présentant les étapes suivantes :
A) la fourniture de feuilles céramiques ;
B) l'impression d'une partie des feuilles céramiques avec un matériau électriquement conducteur (13) afin de former des couches céramiques imprimées (12) et des couches céramiques non imprimées (11) ;
C) la disposition des feuilles céramiques imprimées et non imprimées les unes sur les autres afin de former un empilement ;
D) la découpe d'une géométrie souhaitée à partir de l'empilement afin de former une puce capteur (16) ;
E) le frittage de la puce capteur (16) ;
F) la réalisation d'au moins une couche d'amortissement (14) sur au moins une zone partielle d'une surface extérieure (16a) de la puce capteur (16), la couche d'amortissement (14) présentant un polymère conducteur, et la couche d'amortissement (14) présentant du polyparaphénylène ;
G) l'application d'un autre matériau électriquement conducteur sur une zone partielle de la surface extérieure (16a) de la puce capteur (16) et/ou sur la couche d'amortissement (14) afin de former l'au moins une couche de terminaison (15), l'au moins une couche de terminaison (15) présentant un métal noble.

9. Procédé selon la revendication 8,
la couche d'amortissement (14) étant appliquée à l'aide d'une sérigraphie sur au moins une zone partielle de la surface extérieure (16a) de la puce capteur (16).

10. Procédé selon l'une des revendications 8 ou 9,
les feuilles céramiques présentant un matériau ayant une caractéristique NTC.

11. Procédé selon l'une des revendications 8 à 10,
après l'étape E) et avant l'étape F), une couche de terminaison interne (15) étant réalisée sur la puce capteur (16), et à l'étape F), la couche d'amortissement (14) étant réalisée directement sur la couche de terminaison interne (15c).

12. Procédé selon l'une des revendications 8 à 11,
comprenant en outre l'étape suivante :
H) le contact électrique du dispositif capteur (10), le dispositif capteur (10) étant électriquement contacté par l'application d'un fil de connexion (18) sur une surface de la couche de terminaison (15), ou par une liaison frittée, ou par une liaison brasée.

13. Procédé selon l'une des revendications 8 à 12,
la couche d'amortissement (14) présentant un matériau qui présente une élasticité supérieure à celle d'un matériau de la couche de terminaison (15).
